# EUROPÄISCHE PATENTSCHRIFT

(11) **EP 3 214 630 B1**
(45) Veröffentlichungstag und Bekanntmachung des Hinweises auf die Patenterteilung: **02.09.2026**
(21) Anmeldenummer: 16178551.4
(22) Anmeldetag: 08.07.2016
(51) Int. Cl.: C03C 17/23, A01G 9/14, H01G 9/20, E06B 3/02, E06B 3/663

(54) **GLASMODUL, GEBÄUDE MIT ZUMINDEST EINEM GLASMODUL SOWIE VERFAHREN ZUR HERSTELLUNG EINES GLASMODULS**
GLASS MODULE, BUILDING COMPRISING AT LEAST ONE GLASS MODULE AND METHOD FOR PRODUCING A GLASS MODULE
MODULE EN VERRE, BATIMENT COMPRENANT AU MOINS UN MODULE EN VERRE ET PROCEDE DE FABRICATION D'UN MODULE EN VERRE

(30) Priorität: 26.02.2016 AT 501402016
(43) Veröffentlichungstag der Anmeldung: 06.09.2017
(73) Patentinhaber: Höllwart, Johann, 8042 Graz (AT)
(72) Erfinder: Höllwart, Hans, 8042 Graz (AT); Müller, Mario J., 8047 Kainbach bei Graz (AT)
(74) Vertreter: Schardmüller Gall-Schuhmann Patentanwälte OG

(56) Entgegenhaltungen:
- EP-A2- 1 727 167
- WO-A1-2012/157842
- WO-A1-2015/016110
- WO-A2-2012/053763
- DE-A1- 102011 018 268
- DE-T5- 112014 003 494

## Beschreibung

Die Erfindung betrifft ein mehrschichtiges, zumindest teilweise transparentes Glasmodul, insbesondere zum Einsetzen in eine Außenfläche und/oder Dachfläche eines Gebäudes.

Darüber hinaus betrifft die Erfindung Verwendungen eines solchen Glasmoduls.

Weiter betrifft die Erfindung ein Gebäude mit zumindest einem in einer Außenfläche und/oder Dachfläche eingesetzten Glasmodul.

Des Weiteren betrifft die Erfindung ein Verfahren zur Herstellung eines Glasmoduls zum Einsetzen in eine Außenfläche und/oder Dachfläche eines Gebäudes, wobei das Glasmodul zumindest teilweise transparent ausgebildet wird.

Es ist bekannt, Außenflächen eines Hauses oder Gebäudes mit zumindest teilweise transparenten Glasmodulen auszubilden. Insbesondere bei einem Gewächshaus wird auch dessen Dachfläche zumindest teilweise transparent ausgebildet bzw. durch Glasmodule ersetzt, sodass für ein Wachstum ausreichend Sonnenlicht auf Pflanzen innerhalb des Gewächshauses trifft.

In einem Gewächshaus werden insbesondere Obst- und Gemüsepflanzen sowie Zierpflanzen gezüchtet, welche über Händler von Endverbrauchern erworben werden. Aufgrund der großen und alljährlichen Nachfrage ist es zumindest teilweise notwendig, die Pflanzen im Gewächshaus während der Nacht mit künstlichem Licht zu bestrahlen. Dadurch wird ein Wachstum derselben beschleunigt und eine Effizienz gesteigert.

Nachteilig ist dabei der große Energieverbrauch. Zum Betreiben einer künstlichen Beleuchtung, wie beispielsweise einer LED-Beleuchtung ist eine relativ große Menge an elektrischer Energie notwendig. Weiter wird zur Steuerung einer Bewässerungsanlage und/oder weiteren automatisierten Steuerungssystemen im Gewächshaus elektrische Energie benötigt, was kostenintensiv ist. Da der Preis einer im Gewächshaus gezüchteten Pflanze für den Endverbraucher nicht zu hoch sein soll und diverse Zwischenhändler einen Gewinn erzielen wollen, ist es jedoch notwendig, Produktionskosten gering zu halten.

Ähnliche Überlegungen treffen letztlich für jede Art eines Hauses oder Gebäudes zu, bei welchem eine Energieoptimierung interessant ist.

Das Dokument WO 2012/053763 A2 offenbart ein mehrschichtiges, zumindest teilweise transparentes Glasmodul gemäß dem Oberbegriff des Anspruchs 1.

Hier setzt die Erfindung an. Aufgabe der Erfindung ist es, ein Glasmodul der eingangs genannten Art anzugeben, mit welchem ein Gebäude, insbesondere ein Gewächshaus zumindest teilweise energieautark betrieben werden kann.

Ein weiteres Ziel der Erfindung ist es, Verwendungen eines solchen Glasmoduls anzugeben.

Weiter ist es ein Ziel der Erfindung, ein Gebäude der eingangs genannten Art anzugeben, welches modular zusammenstellbar ist und wobei Teile davon für eine Energieernte nutzbar sind.

Darüber hinaus ist es ein Ziel der Erfindung, ein Verfahren der eingangs genannten Art anzugeben, mit welchem ein gegenüber Feuchtigkeit dichtes sowie zu einer Energieernte nutzbares Glasmodul hergestellt wird.

Die Aufgabe wird erfindungsgemäß dadurch gelöst, dass das Glasmodul der eingangs genannten Art zur Umwandlung von darauf auftreffendem Licht in Strom ausgebildet ist.

Ein mit der Erfindung erzielter Vorteil ist insbesondere darin zu sehen, dass durch die Kombination des zumindest teilweise transparent ausgebildeten und zur Umwandlung von darauf auftreffendem Licht in Strom ausgebildeten Glasmoduls diese Lichtenergie in elektrische Energie umwandelt wird und zugleich genügend Licht in einen Innenraum eines Gebäudes oder Hauses gelangt. Durch die spezielle Ausbildung des Glasmoduls in dessen transparentem Bereich zur Umwandlung von darauf auftreffendem Licht in Strom ist eine Energiegewinnung möglich, wobei eine Energie beispielsweise für eine Bewässerung oder Pumpen oder zum Betrieb einer künstlichen Lichtanlage nutzbar ist bzw. bereitgestellt wird. Das Glasmodul ist weiter bevorzugt dicht gegenüber Feuchtigkeit ausgebildet, sodass keine Feuchtigkeit oder Wasser in dieses eindringt oder zu dessen Versagen desselben führt. Günstig ist es weiter, wenn eine Transparenz des Glasmoduls so gewählt ist, dass dieses gleichzeitig zur Beschattung nutzbar ist bzw. abdunkelnd wirkt. Bei einer Verwendung des Glasmoduls als Außenfläche eines Gebäudes oder Hauses ist es günstig, wenn in Summe etwa 30 % der Außenfläche zu annähernd 100 % transparent ist, um eine Wahrnehmung der Umgebung nicht zu beeinflussen. Es ist günstig, wenn das Glasmodul als Außenfläche und/oder Dachfläche eines Gewächshauses eingesetzt ist, wobei dieses insbesondere in einem Rahmen bzw. Profilen eingefasst ist.

Der mehrschichtige Aufbau des Glasmoduls samt Abdichtung verhindert einen Eintritt von Feuchtigkeit und Sauerstoff in dasselbe. Dadurch sind innerhalb des Glasmoduls auch Materialen anordenbar, welche beispielsweise mit Sauerstoff oder Wasser reagieren, weshalb das Glasmodul trotz Einbindung solcher Materialien zur Umwandlung von Licht in Strom nutzbar ist. Weiter erlaubt der mehrschichtige Aufbau ein dichtes Verpressen des Glasmoduls bei dessen Herstellung, wobei dieses insbesondere umfangsseitig abgedichtet wird. In einer einfachen Variante kann das Glasmodul aus einer Grätzel-Zelle mit einer Abdichtung, beispielsweise einem Profil, ausgebildet sein. Bevorzugt ist das Glasmodul als Grätzel-Zelle mit einem Doppelglas und einem Öffnungen abdichtenden Rahmen ausgebildet.

Es sind zumindest zwei mit einer elektrisch leitfähigen Schicht beschichtete Glasscheiben vorgesehen, wobei zwischen diesen ein Material zur Speicherung von Energie und ein Licht absorbierendes Material angeordnet sind. Die Glasscheiben sind zudem zumindest semitransparent ausgebildet. Hierbei kann es sich um eine Grätzel-Zelle handeln. Da die zwei beschichteten Glasscheiben elektrisch leitfähig sind, stellen diese zwei Elektroden dar. An einer beschichteten Innenseite einer Glasscheibe kann weiter eine Katalysatorschicht angeordnet sein. Die im Licht absorbierenden Material freigesetzten Ladungsträger, üblicherweise Elektronen, bauen somit innerhalb der Glasscheiben ein elektrisches Feld auf. Die elektrische Leitfähigkeit der Glasscheiben kann beispielsweise durch ein beschichtetes Glas hergestellt sein. Dabei ist eine semitransparente, leitende Oxidschicht wie beispielsweise Zinnoxid auf beispielsweise einem eisenarmen Floatglas aufgebracht. Hierbei ist es zweckmäßig, wenn ein Verhältnis zwischen einer Leitfähigkeit und einer Transparenz der Glasscheiben optimiert ist, sodass diese eine hohe Leitfähigkeit bei gleichzeitiger hoher Transparenz aufweisen. Eine Dicke der Oxidschicht kann hierfür im nm-Bereich bis µm-Bereich liegen. Es können auch drei oder mehr beschichtete Glasscheiben vorgesehen sein, wobei zwischen jeweils zwei davon ein Material zur Speicherung von Energie und ein Licht absorbierendes Material angeordnet sind. Dabei können zwei oder mehr unterschiedliche Licht absorbierende Materialien vorgesehen sein, welche jeweils unterschiedliche Wellenlängenbereiche des Lichtes absorbieren. Dies entspricht einer sogenannten "Multilayeranordnung". Darüber hinaus kann es auch vorgesehen sein, dass zwischen zwei beschichteten Glasscheiben zwei oder mehr unterschiedliche Licht absorbierende Materialien angeordnet sind, wobei diese miteinander vermischt sein können.

Vorteilhaft ist es, wenn das Material zur Speicherung von Energie als Granulat ausgebildet ist, insbesondere als Titandioxid-Granulat, wobei zwei oder mehr Granulate mit zumindest zwei verschieden großen durchschnittlichen Korngrößen des Granulats vorgesehen sind. Die Elektronen im Licht absorbierenden Material werden durch eine Absorption von Photonen des Lichtes in höhere Energieniveaus gehoben bzw. angeregt und in das Titandioxid-Granulat übertragen, wobei das Licht absorbierende Material oxidiert wird. Somit ist das Licht absorbierende Material ein Elektronenspender und das Material zur Speicherung von Energie bzw. das Titandioxid-Granulat ein Elektronenempfänger. Insbesondere sind zwei verschieden große Korngrößen des Granulats vorgesehen, beispielsweise eine erste im Bereich von etwa 2 nm bis 8 nm, insbesondere von etwa 3 nm bis 7 nm, bevorzugt von etwa 4 nm bis 6 nm, besonders bevorzugt etwa 5 nm, und eine zweite im Bereich von etwa 15 nm bis 25 nm, bevorzugt etwa 18 nm bis 23 nm, insbesondere etwa 19 nm bis 22 nm. Die kleineren Korngrößen des Granulats stellen sogenannte Wegweiser bzw. "blocking layer" dar, welche verhindern, dass sich die Elektronen in eine falsche Richtung bewegen. Die zwei Granulate mit den zumindest zwei verschieden großen durchschnittlichen Korngrößen sind bevorzugt durch Drucktechnik und ein Muster ausbildend miteinander verbunden, sodass Ströme gering, eine Leistung jedoch hoch ist.

Es kann mit Vorteil vorgesehen sein, dass das Licht absorbierende Material einen Farbstoff umfasst oder aus diesem gebildet ist. Hierfür kann beispielsweise ein organischer oder anorganischer Farbstoff vorgesehen sein. Eine Wahl des Farbstoffes bestimmt einen Wellenlängenbereich bzw. ein Wellenlängenspektrum des Lichtes, welcher vom Farbstoff absorbiert wird bzw. welche durch das Glasmodul hindurch tritt. Bei einer Verwendung des Glasmoduls als Dachfläche eines Gewächshauses ist dies insbesondere von Vorteil, da dieses somit als Lichtfilter nutzbar ist. Eine geeignete Farbstoffwahl begünstigt nämlich ein Pflanzenwachstum. Es kann mit Vorteil vorgesehen sein, dass der Farbstoff so gewählt ist, dass das Glasmodul insbesondere ultraviolettes Licht absorbiert.

Es ist vorteilhaft, wenn die beschichteten Glasscheiben mit einer Transparenz von zumindest 90 %, bevorzugt von zumindest 93 %, insbesondere von zumindest 97 %, ausgebildet sind. Da das Glasmodul bevorzugt aus etwa 99,7 % Glas und etwa 0,3 % restlicher Funktionaltechnologie gebildet ist, stellt eine hohe Transparenz sicher, dass genügend Lichtenergie nutzbar ist bzw. auf die Funktionaltechnologie trifft. Darüber hinaus erschließen sich alle Einsatzgebiete herkömmlicher Glasscheiben, z. B. im Fassadenbau. Insbesondere ist es zweckmäßig, herkömmliche Glasflächen durch das Glasmodul zu ersetzen und diese somit für eine Energieernte zu nutzen.

Beim schichtförmigen Aufbau des Glasmoduls ist vorteilhafterweise an der beschichteten Innenseite einer ersten Glasscheibe das Titandioxid aufgebracht, an welches das Licht absorbierende Material anschließt. Das Titandioxid-Granulat und das Licht absorbierende Material sind jedoch insbesondere nicht voneinander abgetrennt; das Licht absorbierende Material, welches insbesondere als Farbstoff ausgebildet ist, ist an den Teilchen des Titandioxid-Granulates adsorbiert, bzw. haftet an den Titandioxid-Partikel. Die Glasscheibe ist bei einer transparenten Ausbildung derselben durch die Kombination des Titandioxid-Granulats mit dem Licht absorbierenden Material fotosensitiv und setzt bei Lichtanfall Elektronen frei.

Insbesondere kann es dafür günstig sein, dass zwischen den Glasscheiben zumindest ein, insbesondere transparenter Abstandshalter angeordnet ist. Bevorzugt sind mehrere Abstandshalter vorgesehen, welche eine Länge der Glasscheiben aufweisen und mit äquidistanten Abständen zueinander über deren gesamte Fläche angeordnet sind, wobei die Abstandshalter dünn ausgebildet sind bzw. nur einer Bruchteil einer Breite der Glasscheibe aufweisen. Die beiden beschichteten Glasscheiben sind somit über die Abstandshalter miteinander verbunden bzw. fusioniert. Die Abstandshalter sind bevorzugt stabförmig aus Glaspartikeln ausgebildet und auf die Glasscheiben aufgedruckt, um die beiden Glasscheiben mechanisch auf Abstand voneinander zuhalten. Bevorzugt sind die Abstandshalter in Abständen zwischen den leitenden Schichten bzw. den Titandioxid-Schichten angeordnet. Eine solche Separation ermöglicht, dass in weiterer Folge mehrere Glasmodule parallel zueinander geschaltet werden können. Durch die bevorzugt transparente Ausbildung derselben bleibt die Transparenz des Glasmoduls über dessen gesamte Fläche erhalten. Insbesondere ist die Transparenz der Abstandshalter einer Transparenz der beschichteten Glasscheiben angepasst, sodass das Glasmodul eine konstante Transparenz aufweist.

Die zumindest zweite beschichtete Glasscheibe umfasst mehrere Öffnungen, wobei ein Elektrolyt vorgesehen ist, welcher über die Öffnungen zwischen die Glasscheiben eingefüllt ist. Die Öffnungen sind bevorzugt als Löcher ausgebildet und insbesondere zwischen jeweils zwei Abstandshaltern angeordnet, sodass der Elektrolyt in die Bereiche zwischen denselben und ein gesamtes Volumen dieser Bereiche ausfüllend einfüllbar ist. Der Elektrolyt ist insbesondere zwischen dem Licht absorbierenden Material und einer zweiten Glasscheibe vorgesehen, wobei der Elektrolyt eine Elektronen transportierende bzw. leitende Flüssigkeit darstellt. Der Elektrolyt kann beispielsweise lodidsalz umfassen und kann flüssig oder als Feststoffelektrolyt ausgebildet sein. Bei diesem Prozess werden Elektronen im Elektrolyt frei, welche vom Licht absorbierenden Material aufgenommen werden. Hierbei ist auch die zweite Glasscheibe mit einer zumindest semitransparenten, elektrisch leitenden Schicht beschichtet, wie beispielsweise Zinnoxid. Grundsätzlich ist es zwar denkbar, dass der Elektrolyt seitlich zwischen den beiden Glasscheiben in das Glasmodul eingefüllt. Dies hat sich in der Praxis jedoch nicht als zweckmäßig erwiesen, da sich der Elektrolyt dabei nicht gleichmäßig innerhalb der Glasscheiben verteilt.

Es ist zumindest eine zusätzliche Glasschicht vorgesehen, wobei die zusätzliche Glasschicht außenseitig auf der zumindest zweiten Glasscheibe so angeordnet ist, dass die Öffnungen verschlossen sind. Somit ist das Glasmodul über die zumindest eine zusätzliche Glasschicht dicht gegenüber Feuchtigkeit, Sauerstoff und dergleichen isoliert. Die Glasschicht wird auf einer Außenseite der zweiten Glasscheibe gegenüber der Funktionaltechnologie innerhalb der Glasscheiben angeordnet. Es ist ein sogenanntes "Energieglas" geschaffen. Hierbei kann es weiter zweckmäßig sein, das Glasmodul entlang dessen Umfang dicht zu isolieren. Ein solches isoliertes Glasmodul ist auch ohne Weiteres als Fassadenelement und/oder Dachelement in ein Gebäude oder Haus einsetzbar, da dieses erforderliche Sicherheitsaspekte erfüllt. Die zusätzliche Glasschicht ist beispielsweise so auf der zweiten Glasscheibe anordenbar, dass ein Isolierglas gebildet wird. Zwischen der zweiten Glasscheibe und der zusätzlichen Glasschicht ist also ein luftdicht verschlossener Hohlraum angeordnet. Hierzu kann die Glasschicht beabstander von der zweiten Glasscheibe angeordnet sein. Als zusätzliche Glasschicht ist beispielsweise ein Einscheibenglas, ein Sicherheitsglas ein chemisch vorgespanntes Glas oder ein thermisch vorgespanntes Glas verwendbar. Darüber hinaus auch beispielsweise Isolierglas, Sicherheitsglas oder ein verspiegeltes Glas verwendet werden. Das verspiegelte Glas kann beispielsweise auch zusätzlich zu den anderen Komponenten des Glasmoduls angeordnet sein. Weiter kann eine zusätzliche Beschattung vorgesehen sein.

Günstig ist es, wenn die Glasschicht so ausgebildet ist, dass diese UV-Licht filtert bzw. UV-Licht nicht durch dieselbe hindurchtritt, beispielsweise als Floatglas. UV-Licht beschleunigt insbesondere einen Alterungsprozess des Licht absorbierenden Materials. Durch die Filterung dieses Anteils des Lichtspektrums ist somit eine Lebensdauer des Glasmoduls wesentlich erhöht. Darüber hinaus ist UV-Licht auch schädlich für Pflanzen oder Möbel. Ein UV-Licht filterndes Glasmodul wirkt sich somit auch auf eine Lebensdauer derselben positiv aus.

Weiter kann auch eine Glasschicht mit einem Muster, welches beispielsweise in diese geritzt ist, angeordnet sein. Bei einer solchen Ausführung ist es günstig, wenn das Glasmodul eine künstliche Lichtquelle wie eine oder mehrere LED-Zeilen umfasst. Diese sind beispielsweise außenseitig am Glasmodul angeordnet bzw. in dieses integriert, beispielsweise eine Fläche desselben umschließend und zwischen der zweiten Glasscheibe und der zusätzlichen Glasschicht eingefasst. Die künstliche Lichtquelle ist bei einer Abwesenheit von natürlichem Licht zur Beleuchtung beispielsweise eines Innenraums eines Hauses verwendbar, wenn das Glasmodul als Fassadenelement in eine Außenfläche eines Hauses integriert ist. Durch das Muster in der Glasschicht wird das Licht der künstlichen Lichtquelle so über das Glasmodul verteilt, dass ein Eindruck einer vollflächig beleuchteten Fläche entsteht.

Es kann günstig sein, wenn auch außenseitig an einer ersten Glasscheibe eine zusätzliche Glasschicht angeordnet ist, um beispielsweise ein Dreischeiben-Isolierglas zu schaffen. Dabei kann beidseitig eine selbe oder unterschiedliche Glasart angeordnet sein.

Erfindungsgemäß kann vorgesehen sein, dass das Glasmodul für 25 % bis 65 % bevorzugt 30 % bis 60 %, insbesondere 35 % bis 55 %, von Lichtenergie transparent ausgebildet ist. Dadurch tritt genügend Lichtintensität bzw. Lichtenergie durch das Glasmodul hindurch, um beispielsweise Pflanzen innerhalb eines Gewächshauses mit genügend Lichtenergie zu versorgen oder für eine ausreichende Belichtung in Häusern zu sorgen, gegebenenfalls in Kombination mit herkömmlichen Fenstern.

Zweckmäßigerweise kann auch vorgesehen sein, dass das Glasmodul mit zumindest einer Krümmung ausgebildet ist. Ein solches Glasmodul ist beispielsweise als gekrümmtes bzw. gebogenes Fassadenelement verwendbar.

Von Vorteil ist es weiter, wenn zwei oder mehr Glasmodule vorgesehen sind, wobei die Glasmodule parallel miteinander verbunden sind. Die Glasmodule können beispielsweise in eine Dachfläche eines Gewächshauses eingesetzt sein. Durch die parallele Verbindung ist es möglich, mehrere Glasmodule modular zusammenzustellen und beliebig auszutauschen. Auch bei einem Ausfall eines Glasmoduls können dadurch die restlichen Glasmodule weiter betrieben werden bzw. wird ein Stromkreislauf aufrechterhalten. Hierbei sind mit Vorteil ein Rahmen bzw. Profile zur Stromversorgung und/oder Stromabnahme zwischen den einzelnen Glasmodulen angeordnet bzw. sind diese jeweils in einen Rahmen eingefasst.

Eine Verwendung eines erfindungsgemäßen Glasmoduls erfolgt mit Vorteil als Dachelement eines Gewächshauses.

Eine weitere Verwendung eines erfindungsgemäßen Glasmoduls erfolgt vorteilhaft als Fassadenelement eines Hauses, beispielsweise eines Gewächshauses.

Eine zusätzliche Verwendung eines erfindungsgemäßen Glasmoduls erfolgt mit Vorteil bei einer Innenraumgestaltung. Das Glasmodul kann beispielsweise in ein Möbel wie einen Tisch integriert oder als Raumtrennungselement verwendet werden.

Das weitere Ziel wird erreicht, wenn bei einem Gebäude der eingangs genannten Art Profile vorgesehen sind, wobei das Glasmodul zwischen zumindest zwei Profilen angeordnet ist.

Ein Vorteil ist insbesondere darin zu sehen, dass ein Glasmodul in einer einfachen Weise zwischen zumindest zwei Profilen einsetzbar ist. Sind mehrere Glasmodule vorgesehen, so sind diese modular zusammensetzbar sowie austauschbar. Die Profile bzw. Rahmen sind hierfür so ausgebildet, dass ein Einsetzen eines Glasmoduls mit sogenannter Plugand-play-Technik erfolgen kann.

Zweckmäßig ist es, wenn in den Profilen Leitungen angeordnet sind. Insbesondere ist eine gesamte Elektrik in den Profilen integriert. Hierzu sind die Profile zumindest teilweise hohl ausgebildet. Es können beispielsweise Medien- und/oder Substratleitungen vorgesehen sein. Des Weiteren können in den Profilen elektrische Leitungen angeordnet sein, um beispielsweise Strom in eine Beleuchtungsanlage einzukoppeln. In einem Gewächshaus kann es nämlich notwendig sein, Pflanzen 24 Stunden pro Tag mit Licht zu versorgen. Hierfür kann innerhalb des Glasmoduls eine LED-Beleuchtung angeordnet bzw. in dieses integriert sein. Diese ist bevorzugt außenseitig am Glasmodul angeordnet, beispielsweise eine Fläche desselben umschließend. Ein weiterer Vorteil eines Gebäudes oder Hauses mit einem oder mehreren Glasmodulen sowie einer LED-Beleuchtung ist, dass das Glasmodul das LED-Licht zumindest teilweise reflektiert, wodurch dieses beispielsweise effizienter zum Pflanzenwachstum nutzbar ist.

Von Vorteil ist es weiter, wenn mehrere Glasmodule vorgesehen sind, wobei die Glasmodule modular zusammengesetzt sind. Ein Haus bzw. dessen Umrissfläche kann beispielsweise komplett aus Glasmodulen gebildet sein, wobei diese jeweils zwischen zumindest zwei Profilen angeordnet bzw. in solche eingefasst sind. Somit ist eine gesamte Außenfläche eines Hauses zur Energieernte bzw. Energiegewinnung nutzbar. Zugleich sind die Glasmodule auch als Lichtfilter nutzbar, um einen Wellenlängenbereich bzw. ein Wellenlängenspektrum des hindurchtretenden Lichtes mit beispielsweise Pflanzen abzustimmen. Darüber hinaus dienen die Glasmodule als Lichtintensitätsminderer, sodass eine Lichtintensität auch ortsabhängig einstellbar ist. Weiter kann vorgesehen sein, dass das Licht absorbierende Material zwischen zwei oder mehr Glasmodulen variiert, sodass diese ortsabhängige Lichtfilter bilden, um verschiedenen Wellenlängenbereiche des Lichts auf beispielsweise verschiedene Pflanzen treffen zu lassen. Ferner kann eine elektrische Steuerung vorgesehen sein, mit welcher einzelne Glasmodule gegebenenfalls mitsamt einem oder mehreren Profilen so bewegbar sind, dass diese einen Luftaustausch des Hauses mit der Umgebung erlauben. Ist das Gebäude als Gewächshaus ausgebildet, kann dies günstig sein, um darin befindliche Pflanzen robust gegenüber Umwelteinflüssen auszubilden. Diese Steuerung wird insbesondere mit aus Lichtenergie gewonnenen und durch die Glasmodule umgewandelten Strom betrieben.

Das verfahrensmäßige Ziel wird erreicht, wenn bei einem Verfahren der eingangs genannten Art das Glasmodul zumindest teilweise schichtförmig aufgebaut wird, um darauf auftreffendes Licht in Strom umzuwandeln. Ein Vorteil des erfindungsgemäßen Verfahrens gemäß Anspruch 10 ist insbesondere darin zu sehen, dass die schichtförmige Ausbildung des Glasmoduls einen Feuchtigkeitseintritt und einen Sauerstoffeintritt in dasselbe verhindert. Dadurch können innerhalb des Glasmoduls auch Stoffe angeordnet werden, welche beispielsweise mit Sauerstoff oder Wasser reagieren, wodurch das Glasmodul zur Umwandlung von Licht in Strom genutzt werden kann. Durch den schichtförmigen Aufbau kann das Glasmodul in weiterer Folge dicht verpresst werden.

Zweckmäßig ist es, wenn die erste Glasscheibe mit einer zumindest teilweise transparenten, elektrisch leitfähigen Oxidschicht beschichtet wird. Um eine Transparenz der Glasscheibe aufrechtzuerhalten, wird die Oxidschicht, welche beispielsweise Zinnoxid umfassen kann, bevorzugt dünner als 10 µm, insbesondere dünner als 8 µm, besonders bevorzugt 6 µm oder dünner aufgebracht. Die Oxidschicht wird weiter mit einer Struktur aufgebracht, wobei die Glasscheibe insbesondere nicht vollflächig beschichtet wird. Alternativ kann die Oxidschicht in einem ersten Schritt vollflächig aufgebracht und in einem zweiten Schritt mit einem Laser teilweise entfernt werden, sodass eine Oberflächenstruktur ausgebildet wird.

Mit Vorteil wird das Material zur Speicherung von Energie auf die beschichtete erste Glasscheibe aufgebracht, wobei dieses als Granulat ausgebildet ist, insbesondere als Titandioxid-Granulat, wobei zwei oder mehr Granulate mit zumindest zwei verschieden großen durchschnittlichen Korngrößen des Granulats miteinander in Verbindung gebracht werden. Bevorzugt wird in einem ersten Schritt eine erste Titandioxid-Schicht aufgebracht, insbesondere auf diese gedruckt (beispielsweise mit einem Inkjet-Verfahren), welche ein Granulat mit durchschnittlichen Korngrößen von im Bereich von etwa 2 nm bis 8 nm, insbesondere von etwa 3 nm bis 7 nm, bevorzugt von etwa 4 nm bis 6 nm, besonders bevorzugt etwa 5 nm umfasst. Auf diese wird in einem zweiten Schritt eine zweite Titandioxid-Schicht aufgebracht, welche ein Granulat mit durchschnittlichen Korngrößen im Bereich von etwa 15 nm bis 25 nm, bevorzugt etwa 18 nm bis 23 nm, insbesondere etwa 19 nm bis 22 nm umfasst. Die beiden Titandioxid-Schichten werden anschließend miteinander gedruckt, wobei diese im Druck bevorzugt ein Muster ausbilden, sodass das Glasmodul eine hohe elektrische Leistung aufweist. Das Granulat der zuerst aufgebrachten Titandioxid-Schicht, welches kleinere durchschnittliche Korngrößen des Granulats umfasst, wird als Wegweiser bezeichnet, da dieses eine falsche Fließrichtung der Elektronen zumindest reduziert.

Zweckmäßig ist es, wenn zumindest ein, insbesondere transparenter Abstandshalter auf die erste Glasscheibe gedruckt wird. Bevorzugt werden mehrere Abstandshalter bereitgestellt, welche eine Länge der Glasscheibe aufweisen und mit äquidistanten Abständen auf die erste Glasscheibe gedruckt werden. Es kann vorgesehen sein, dass die Abstandshalter etwa 15 % einer gesamten Fläche des Glasmoduls umfassen. Diese werden weiter bevorzugt zwischen die Abstände der Oxidschichten bzw. der Titandioxid-Schichten unmittelbar auf die erste Glasscheibe aufgebracht, sodass diese die Oxidschichten bzw. Titandioxid-Schichten voneinander separieren. Die Abstandshalter werden insbesondere stabförmig aus Glaspartikeln gebildet. Besonders bevorzugt werden die Abstandshalter mit derselben Transparenz wie die beschichtete Glasscheibe ausgebildet, sodass das Glasmodul mit einer über dessen gesamte Fläche konstanten Transparenz ausgebildet wird.

Es ist weiter günstig, wenn eine zweite Glasscheibe auf den zumindest einen Abstandshalter aufgebracht und über diesen mit der ersten Glasscheibe verbunden wird. Es werden dadurch die beiden Glasscheiben mechanisch auf Abstand voneinander gehalten, wobei eine Verbindung hergestellt bzw. ein Behälter geschaffen wird. Die beiden Glasscheiben werden vorteilhaft über die Abstandshalter über einen Wärmeprozess miteinander fusioniert.

Von Vorteil ist es weiter, wenn ein insbesondere einen Farbstoff umfassendes oder aus diesem gebildetes Licht absorbierendes Material zwischen die Glasscheiben eingebracht wird, wonach ein Elektrolyt über Öffnungen in der zumindest zweiten Glasscheibe eingebracht wird. Der eingebrachte Farbstoff haftet an den Titandioxid-Partikeln und bestimmt einen Wellenlängenbereich, welche durch das Glasmodul hindurchgelassen wird. Als Elektrolyt kann beispielsweise eine Jodidlösung zwischen die Glashalter bzw. die Abstandshalter eingebracht werden. Alternativ kann auch ein Feststoffelektrolyt vorgesehen sein. Weiter können im Glasmodul Expansionskammern angeordnet sein, sodass dieses selbst bei einer Ausdehnung des Elektrolyts dicht gehalten wird. Die Öffnungen sind insbesondere zwischen zwei Abstandshaltern angeordnet, sodass der Elektrolyt in die Bereiche zwischen denselben und ein gesamtes Volumen dieser Bereiche ausfüllend eingefüllt wird.

Es wird zumindest eine zusätzliche Glasschicht auf zumindest der zweiten Glasscheibe angeordnet, um die Öffnungen zu verschließen. Das Glasmodul wird über die zumindest eine zusätzliche Glasschicht gegenüber Feuchtigkeit, Sauerstoff und dergleichen isoliert bzw. abgedichtet. Die Glasschicht wird auf einer Außenseite der zweiten Glasscheibe gegenüber der Funktionaltechnologie innerhalb der Glasscheiben angeordnet. Ein sogenanntes "Energieglas" wird geschaffen. Hierbei kann es weiter zweckmäßig sein, wenn das Glasmodul entlang dessen Umfang dicht abgedichtet bzw. isoliert wird. Ein solches isoliertes Glasmodul kann ohne Weiteres als Fassadenelement und/oder Dachelement in ein Gebäude eingesetzt werden, da dieses erforderliche Sicherheitsaspekte wie Wärmeschutzverordnungen erfüllt. Die zusätzliche Glasschicht wird beispielsweise so auf der zweiten Glasscheibe angeordnet, dass ein Isolierglas gebildet wird. Zwischen der zweiten Glasscheibe und der zusätzlichen Glasschicht wird ein luftdicht verschlossener Hohlraum ausgebildet. Als zusätzliche Glasschicht ist beispielsweise ein Einscheibenglas, ein Sicherheitsglas ein chemisch vorgespanntes Glas oder ein thermisch vorgespanntes Glas verwendet werden.

Günstig ist es, wenn UV-Licht von der Glasschicht gefiltert wird bzw. UV-Licht nicht durch diese hindurch tritt. Die Glasschicht kann hierfür als Floatglas ausgebildet werden. UV-Licht beschleunigt insbesondere einen Alterungsprozess des Licht absorbierenden Materials. Durch die Filterung dieses Anteils des Lichtspektrums wird somit eine Lebensdauer des Glasmoduls wesentlich erhöht. Darüber hinaus ist UV-Licht auch schädlich für Pflanzen oder Möbel. Ein UV-Licht filterndes Glasmodul beeinflusst somit auch auf eine Lebensdauer derselben positiv.

Weiter kann auch eine Glasschicht mit einem Muster, welches beispielsweise in diese geritzt ist, verwendet werden. Bei einer solchen Ausführung ist es günstig, wenn im Glasmodul zusätzlich eine künstliche Lichtquelle wie eine oder mehrere LED-Zeilen angeordnet wird. Diese werden beispielsweise außenseitig am Glasmodul angeordnet bzw. in dieses integriert, beispielsweise eine Fläche desselben umschließend und zwischen der zweiten Glasscheibe und der zusätzlichen Glasschicht eingefasst. Die künstliche Lichtquelle wird bei einer Abwesenheit von natürlichem Licht zur Beleuchtung beispielsweise eines Innenraums eines Hauses verwendet, wenn das Glasmodul als Fassadenelement in eine Außenfläche eines Hauses integriert ist. Durch das Muster in der Glasschicht wird das Licht der künstlichen Lichtquelle so über das Glasmodul verteilt, dass ein Eindruck einer vollflächig beleuchteten Fläche entsteht.

Es kann günstig sein, wenn auch außenseitig an einer ersten Glasscheibe eine zusätzliche Glasschicht angeordnet wird, um beispielsweise ein Dreischeiben-Isolierglas zu schaffen. Dabei kann beidseitig eine selbe oder unterschiedliche Glasart angeordnet werden.

Günstig kann es sein, wenn das Glasmodul mit zumindest einer Krümmung ausgebildet wird, um dieses beispielsweise als gekrümmte Außenfläche und/oder Dachfläche in ein Gebäudes einzusetzen. Es können somit z. B. auch gekrümmte Fassadenelemente durch ein Glasmodul ersetzt werden.

Weitere Merkmale, Vorteile und Wirkungen ergeben sich aus dem nachfolgend dargestellten Ausführungsbeispiel. In den Zeichnungen, auf welche dabei Bezug genommen wird, zeigen:
- Fig. 1: einen schematischen Aufbau eines erfindungsgemäßen Glasmoduls;
- Fig. 2: ein Gewächshaus mit erfindungsgemäßen Glasmodulen als Dachfläche;
- Fig. 3: ein komplex aufgebautes Glasmodul.

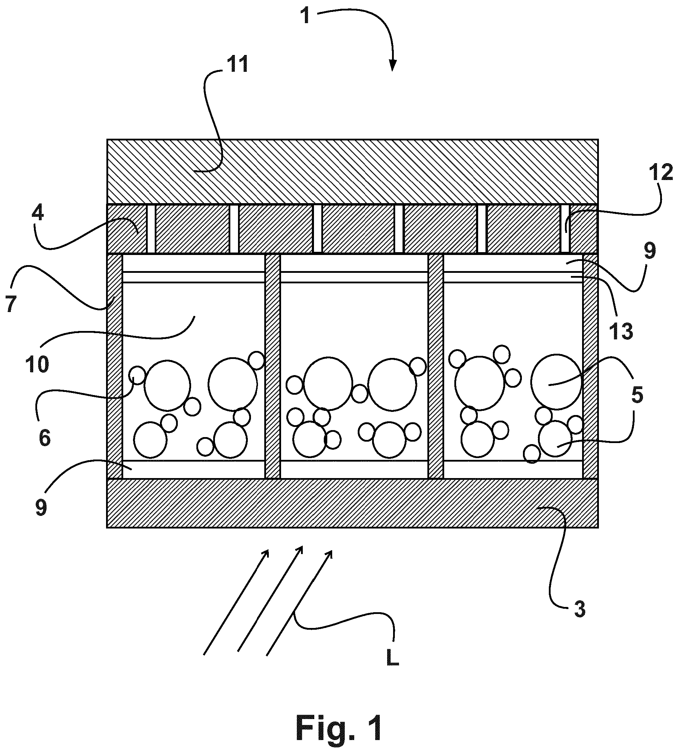

Fig. 1 zeigt einen Querschnitt eines erfindungsgemäßen Glasmoduls 1 bzw. einen Aufbau eines solchen. Dieses ist beidseitig mit jeweils einer Glasscheibe 3, 4 abgeschlossen. Die Glasscheiben 3, 4 weisen eine hohe Transparenz von etwa 97 % auf und sind innenseitig teilweise mit einer elektrisch leitfähigen Oxidschicht 9 wie Zinnoxid beschichtet. Zur Absorption von Licht L ist ein Licht L absorbierendes Material 6, insbesondere ein organischer Farbstoff vorgesehen. Dieser haftet an einem Material 5 zur Speicherung von Energie, welches auf eine erste beschichtete Glasscheibe 3 aufgebracht ist. Das Material 5 zur Speicherung von Energie ist als Titandioxid-Granulat mit zwei verschieden großen durchschnittlichen Korngrößen ausgebildet. Zwischen dem Farbstoff bzw. dem Titandioxid-Granulat und einer zweiten Glasscheibe 4 ein Elektrolyt 10 vorgesehen, welcher beispielsweise als Elektronen transportierende bzw. leitende Flüssigkeit ausgebildet ist. Diese Flüssigkeit kann aus einer wässrigen lodidlösung gebildet sein oder lodid umfassen. Weiter kann ein Feststoffelektrolyt vorgesehen sein. Darüber hinaus ist zwischen dem Elektrolyt 10 und der zweiten beschichteten Glasscheibe 4 eine Katalysatorschicht 13 vorgesehen.

Um die beiden Glasscheiben 3, 4 mechanisch auf Abstand zu halten, sind transparente Abstandshalter 7 vorgesehen. Diese sind aus Glaspartikeln gebildet und auf die Glasscheiben 3, 4 gedruckt. Die Abstandshalter 7 erstrecken sich jeweils über eine gesamte Länge der Glasscheiben 3, 4, weisen jedoch nur einen Bruchteil deren Breite auf bzw. sind diese dünn ausgebildet. Weiter sind die Abstandshalter 7 in bevorzugt äquidistanten Abständen zueinander zwischen den Oxidschichten 9 bzw. dem Material 5 zur Speicherung von Energie bzw. dem Licht L absorbierenden Material 6 bzw. dem Elektrolyt 10 angeordnet. Eine Transparenz der Abstandshalter 7 entspricht etwa einer Transparenz der beschichteten Glasscheiben 3, 4.

Da die zweite Glasscheibe 4 zum Einfüllen des Elektrolyts 10 mehrere Öffnungen 12 umfasst, welche nicht zur Gänze abdichtbar sind, ist eine zusätzliche Glasschicht 11 vorgesehen, welche die Öffnungen 12 verschließt.

Auf das Glasmodul 1 auftreffendes Licht L setzt in diesem Ladungsträger frei, welche durch Rekombination elektrische Energie in diesem speichern. Die erste Glasscheibe 3 ist durch die Kombination des Titandioxid-Granulats mit dem Farbstoff fotosensitv. Die Elektronen im Farbstoff bzw. in den Farbstoffmolekülen werden durch eine Absorption von Photonen des Lichtes L in höhere Energieniveaus gehoben bzw. angeregt und in das Titandioxid-Granulat übertragen. Es ist ein "Energieglas" geschaffen.

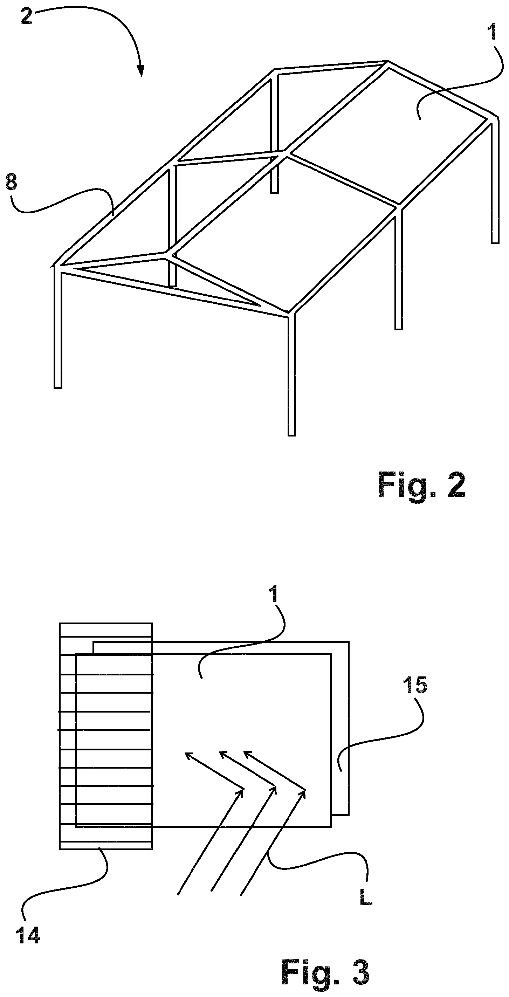

Fig. 2 zeigt ein Gewächshaus mit erfindungsgemäßen Glasmodulen 1 als Dachfläche. Es kann auch vorgesehen sein, dass die Glasmodule 1 stattdessen oder zusätzlich als Außenfläche verwendet werden. Weiter können diese bei einem beliebigen Gebäude 2 als Fassadenelement oder Dachelement eingesetzt sein. Wie in Fig. 2 ersichtlich, sind Profile 8 vorgesehen, zwischen welchen die Glasmodule 1 eingesetzt sind. Die Profile 8 können beispielsweise aus Stahl oder Aluminium gebildet sein und sind in der Regel so ausgebildet, dass ein einfaches Einsetzen und Entfernen der Glasmodule 1 möglich ist. Weiter sind in den Profilen 8 nicht dargestellte Leitungen angeordnet, weshalb die Profile 8 im Wesentlichen hohl ausgebildet sind. Die Leitungen können Medien- und/oder Substratleitungen bzw. elektrische Leitungen umfassen. Sind mehrere Glasmodule 1 vorgesehen, so werden diese parallel zueinander geschaltet, sodass ein einfaches Austauschen eines Glasmoduls 1 bei einem gleichzeitigen geschlossenen Stromkreislauf möglich ist. Durch die Verwendung der Glasmodule 1 als Dachfläche und/oder Außenfläche eines Gewächshauses ist das Pflanzenwachstum in diesem optimiert. Durch die transparente Ausbildung derselben sind diese flächendeckend anordenbar, wodurch viel Sonnenenergie geerntet bzw. in elektrischen Strom umgewandelt werden kann. Gleichzeitig gelangt genügend Licht L zu den Pflanzen, sodass zumindest bei Vorhandensein von Sonnenlicht keine künstlichen Lichtquellen notwendig sind. Weiter sind durch eine geeignete Farbstoffwahl gewisse Wellenlängenbereiche des Lichtes L filterbar.

Darüber hinaus können in einem Gebäude 2 mehrere Glasmodule 1 integriert sein, welche in jeweils eine andere Richtung zu Licht L orientiert sind, sodass diese jeweils unterschiedliche Reflexions-, Absorbtions- und/oder Filterwirkungen aufweisen. Hierzu können beispielsweise zwei oder mehr Glasmodule 1 sich zumindest teilweise überlappend angeordnet sein. Ferner kann ein oder mehrere Glasmodule 1 gänzlich oder teilweise mit beispielsweise einer Beschattung 14 oder einem Spiegel 15 kombiniert sein, wodurch eine funktionale Vielfalt des Glasmoduls 1 weiter erhöht ist. Fig. 3 zeigt exemplarisch ein solches komplex aufgebautes Glasmodul 1, umfassend eine Beschattung 14 und einen Spiegel 15. Hierbei trifft Licht L nur teilweise durch die Beschattung 14 hindurch auf das Glasmodul 1 und wird aufgrund des hinter demselben angeordneten Spiegels 15 wieder reflektiert.

Bei einem erfindungsgemäßen Verfahren zur Herstellung eines Glasmoduls 1 zum Einsetzen in eine Außenfläche und/oder Dachfläche eines Gebäudes 2, insbesondere eines Gewächshauses wird dieses zumindest teilweise schichtförmig aufgebaut, um darauf auftreffendes Licht L in Strom umzuwandeln. Das Glasmodul 1 wird weiter zumindest teilweise transparent ausgebildet, sodass Licht L zugleich durch dieses hindurchtreten kann. In einem ersten Schritt wird eine erste Glasscheibe 3 bereitgestellt, welche teilweise mit einer zumindest semitransparenten Oxidschicht 9 beschichtet wird, welche elektrisch leitfähig ist. Sodann wird ein Material 5 zur Speicherung von Energie auf die erste beschichtete Glasscheibe 3 aufgebracht, welches als Titandioxid-Granulat mit zwei Granulaten aus zwei verschieden großen durchschnittlichen Korngrößen ausgebildet ist. Dabei wird zuerst das Granulat mit den kleineren durchschnittlichen Korngrößen und anschließend das Granulat mit den größeren durchschnittlichen Korngrößen aufgebracht, wonach diese ein Muster ausbildend miteinander verpresst bzw. gedruckt werden. Das Muster wird bevorzugt so ausgebildet, dass die erste Glasscheibe 3 nicht vollflächig mit der Oxidschicht 9 und dem Titandioxid-Granulat beschichtet ist. In diese nicht beschichteten Flächen werden in einem nächsten Schritt Abstandshalter 7 aufgebracht bzw. aufgedruckt. Die Abstandshalter 7 werden aus Glaspartikeln gebildet und verlaufen über eine gesamte Länge der Glasscheibe 3. Diese sind jedoch dünn ausgebildet, sodass mehrere Abstandshalter 7 mit jeweils einem Abstand zueinander über eine gesamte Breite der Glasscheibe 3 aufgebracht werden können. Auf die Abstandshalter 7 wird anschließend eine zweite Glasscheibe 4 aufgebracht und über die Abstandshalter 7 mit der ersten Glasscheibe 3 verpresst. Auch die zweite Glasscheibe 4 wird transparent ausgebildet und mit einer zumindest teilweise transparenten, elektrisch leitfähigen Oxidschicht 9 beschichtet. Durch Abschluss dieser Schritte ist bzw. die Herstellung der Verbindung zwischen den zwei Glasscheiben 3, 4 wird ein Behälter geschaffen. Daran anschließend wird ein aus einem Farbstoff gebildetes Licht L absorbierendes Material 6 zwischen die Glasscheiben 3, 4 bzw. in die Hohlräume zwischen die Abstandshalter 7 eingebracht wird, wonach ein Elektrolyt 10, über Öffnungen 12 in der zweiten Glasscheibe 4 eingebracht bzw. der Behälter damit befüllt wird. Darüber hinaus kann der Elektrolyt 10 auch als Feststoffelektrolyt ausgebildet sein. Da sich der Elektrolyt bei einer Erwärmung ausdehnt, werden darüber hinaus nicht dargestellte Expansionskammern vorgesehen. Das Glasmodul 1 wird durch ein Auflaminieren einer zusätzlichen Glasschicht 11 abgeschlossen bzw. abgedichtet.

Es kann auch vorgesehen sein, dass ein Glasmodul 1 ein vorab bestimmtes Muster ausbildend mit einem Drucker gedruckt wird.

Trifft Licht L auf das Glasmodul 1, werden die Elektronen im Farbstoff durch eine Absorption von Photonen des Lichtes L in höhere Energieniveaus angeregt und in das Titandioxid-Granulat übertragen. Im Glasmodul 1 werden also Ladungsträger frei, welche durch Rekombination elektrische Energie in diesem speichern bzw. in einem Stromkreislauf abgeben. Diese elektrische Energie kann bei einer Verwendung des oder mehrerer Glasmodule 1 als Dach- und Außenfläche eines Gewächshauses weiter verwendet werden, beispielsweise um eine elektrische Bewässerungsanlage oder künstliche Lichtquellen mit Strom zu versorgen. Ein Gewächshaus kann somit quasi energieautark betrieben werden. Darüber hinaus gelangt durch die zumindest teilweise transparente Ausbildung des Glasmoduls 1 genügend Licht durch dieses hindurch, um Pflanzen in einem Gewächshaus damit zu versorgen. Weiter ist durch eine geeignete Wahl des Farbstoffes ein Glasmodul 1 mit einem Lichtfilter geschaffen. Ein gewählter Farbstoff kann nur bestimmte Wellenlängenbereiche des Lichtes L durch das Glasmodul 1 treten lassen und für die restlichen als Filter wirken. Dies ist günstig, um ein Pflanzenwachstum zu beschleunigen, da manche Pflanzen beispielsweise ohne UV-Licht besser wachsen.

## Patentansprüche

1. Mehrschichtiges, zumindest teilweise transparentes Glasmodul (1), insbesondere zum Einsetzen in eine Außenfläche und/oder Dachfläche eines Gebäudes (2), wobei das Glasmodul (1) zur Umwandlung von darauf auftreffendem Licht (L) in Strom ausgebildet ist, wobei zumindest zwei mit einer elektrisch leitfähigen Schicht beschichtete Glasscheiben (3, 4) vorgesehen sind, nämlich eine erste beschichtete Glasscheibe (3) und eine zweite beschichtete Glasscheibe (4), wobei zwischen diesen ein Material (5) zur Speicherung von Energie und ein Licht (L) absorbierendes Material (6) angeordnet sind, wobei in Elektrolyt (10) vorgesehen ist, welcher über mehrere in zumindest der zweiten beschichteten Glasscheibe (4) vorgesehene Öffnungen (12) zwischen die Glasscheiben (3, 4) eingefüllt ist, **dadurch gekennzeichnet, dass** zumindest eine zusätzliche Glasschicht (11) außenseitig auf der zweiten Glasscheibe (4) so angeordnet ist, dass die Öffnungen (12) verschlossen sind.

2. Glasmodul (1) nach Anspruch 1, **dadurch gekennzeichnet, dass** das Material (5) zur Speicherung von Energie als Granulat ausgebildet ist, insbesondere als Titandioxid-Granulat, wobei zwei oder mehr Granulate mit zumindest zwei verschieden großen durchschnittlichen Korngrößen des Granulats vorgesehen sind.

3. Glasmodul (1) nach Anspruch 1 oder 2, **dadurch gekennzeichnet, dass** das Licht (L) absorbierende Material (6) einen Farbstoff umfasst oder aus diesem gebildet ist.

4. Glasmodul (1) nach einem der Ansprüche 1 bis 3, **dadurch gekennzeichnet, dass** die beschichteten Glasscheiben (3, 4) mit einer Transparenz von zumindest 90 %, bevorzugt von zumindest 93 %, insbesondere von zumindest 97 %, ausgebildet sind.

5. Glasmodul (1) nach einem der Ansprüche 1 bis 4, **dadurch gekennzeichnet, dass** zwischen den Glasscheiben (3, 4) zumindest ein, insbesondere transparenter Abstandshalter (7) angeordnet ist.

6. Verwendung eines Glasmoduls (1) nach einem der Ansprüche 1 bis 5 als Dachelement eines Gewächshauses.

7. Verwendung eines Glasmoduls (1) nach einem der Ansprüche 1 bis 5 als Fassadenelement eines Hauses (2), beispielsweise eines Gewächshauses.

8. Verwendung eines Glasmoduls (1) nach einem der Ansprüche 1 bis 5 für eine Innenraumgestaltung.

9. Gebäude (2) mit zumindest einem in einer Außenfläche und/oder Dachfläche eingesetzten Glasmodul (1) nach einem der Ansprüche 1 bis 5, **dadurch gekennzeichnet, dass** Profile (8) vorgesehen sind, wobei das Glasmodul (1) zwischen zumindest zwei Profilen (8) angeordnet ist.

10. Verfahren zur Herstellung eines Glasmoduls (1) zum Einsetzen in eine Außenfläche und/oder Dachfläche eines Gebäudes (2), wobei das Glasmodul (1) zumindest teilweise transparent ausgebildet wird, wobei das Glasmodul (1) zumindest teilweise schichtförmig aufgebaut wird, um darauf auftreffendes Licht (L) in Strom umzuwandeln, wobei zumindest zwei mit einer elektrisch leitfähigen Schicht beschichtete Glasscheiben (3, 4) vorgesehen werden, nämlich eine erste beschichtete Glasscheibe (3) und eine zweite beschichtete Glasscheibe (4), wobei zwischen diesen ein Material (5) zur Speicherung von Energie und ein Licht (L) absorbierendes Material (6) angeordnet wird, wobei ein Elektrolyt (10) vorgesehen wird, welcher über mehrere in zumindest der zweiten beschichteten Glasscheibe (4) vorgesehene Öffnungen (12) zwischen die Glasscheiben (3, 4) eingefüllt wird, **dadurch gekennzeichnet, dass** zumindest eine zusätzliche Glasschicht (11) außenseitig auf der zweiten Glasscheibe (4) so angeordnet wird, dass die Öffnungen (12) verschlossen werden.

11. Verfahren nach Anspruch 10, **dadurch gekennzeichnet, dass** die erste Glasscheibe (3) mindestens teilweise mit einer zumindest teilweise transparenten, elektrisch leitfähigen Oxidschicht (9) beschichtet wird.

12. Verfahren nach Anspruch 11, **dadurch gekennzeichnet, dass** das Material (5) zur Speicherung von Energie auf die beschichtete erste Glasscheibe (3) aufgebracht wird, wobei dieses als Granulat ausgebildet ist, insbesondere als Titandioxid-Granulat, wobei zwei oder mehr Granulate mit zumindest zwei verschieden großen durchschnittlichen Korngrößen des Granulats miteinander in Verbindung gebracht werden.

13. Verfahren nach Anspruch 11 oder 12, **dadurch gekennzeichnet, dass** zumindest ein, insbesondere transparenter Abstandshalter (7) auf die beschichtete erste Glasscheibe (3) gedruckt wird.

## Claims

1. Multi-layer glass module (1), at least partially transparent, in particular for insertion into an outer surface and/or roof surface of a building (2), wherein the glass module (1) is designed to convert light (L) incident thereon into electricity, wherein at least two glass panes (3, 4) coated with an electrically conductive layer are provided, namely a first coated glass pane (3) and a second coated glass pane (4), wherein a material (5) for storing energy and a light (L)-absorbing material (6) are arranged between them, wherein an electrolyte (10) is provided, which is filled between the glass panes (3, 4) via a plurality of openings (12) provided in at least the second coated glass pane (4), **characterised in that** at least one additional glass layer (11) is arranged on the outer side of the second glass pane (4) such that the openings (12) are closed.

2. Glass module (1) according to claim 1, **characterised in that** the material (5) for storing energy is formed as a granulate, in particular as a titanium dioxide granulate, wherein two or more granulates having at least two different average grain sizes of the granulate are provided.

3. Glass module (1) according to claim 1 or 2, **characterised in that** the light (L)-absorbing material (6) comprises a dye or is formed therefrom.

4. Glass module (1) according to any one of claims 1 to 3, **characterised in that** the coated glass panes (3, 4) are formed with a transparency of at least 90%, preferably of at least 93%, in particular of at least 97%.

5. Glass module (1) according to any one of claims 1 to 4, **characterised in that** at least one, in particular transparent, spacer (7) is arranged between the glass panes (3, 4).

6. Use of a glass module (1) according to any one of claims 1 to 5 as a roof element of a greenhouse.

7. Use of a glass module (1) according to any one of claims 1 to 5 as a facade element of a house (2), for example a greenhouse.

8. Use of a glass module (1) according to any one of claims 1 to 5 for an interior design.

9. Building (2) comprising at least one glass module (1) according to any one of claims 1 to 5 inserted in an outer surface and/or roof surface, **characterised in that** profiles (8) are provided, wherein the glass module (1) is arranged between at least two profiles (8).

10. Method for producing a glass module (1) for insertion into an outer surface and/or roof surface of a building (2), wherein the glass module (1) is formed at least partially transparent, wherein the glass module (1) is constructed at least partially in layers in order to convert light (L) incident thereon into electricity, wherein at least two glass panes (3, 4) coated with an electrically conductive layer are provided, namely a first coated glass pane (3) and a second coated glass pane (4), wherein a material (5) for storing energy and a light (L)-absorbing material (6) are arranged between them, wherein an electrolyte (10) is provided, which is filled between the glass panes (3, 4) via a plurality of openings (12) provided in at least the second coated glass pane (4), **characterised in that** at least one additional glass layer (11) is arranged on the outer side of the second glass pane (4) such that the openings (12) are closed.

11. Method according to claim 10, **characterised in that** the first glass pane (3) is at least partially coated with an at least partially transparent, electrically conductive oxide layer (9).

12. Method according to claim 11, **characterised in that** the material (5) for storing energy is applied to the coated first glass pane (3), wherein it is formed as a granulate, in particular as a titanium dioxide granulate, wherein two or more granulates having at least two different average grain sizes of the granulate are brought into contact with one another.

13. Method according to claim 11 or 12, **characterised in that** at least one, in particular transparent, spacer (7) is printed onto the coated first glass pane (3).

## Revendications

1. Module de verre (1) multicouche, au moins partiellement transparent, notamment destiné à être inséré dans une surface extérieure et/ou une surface de toit d'un bâtiment (2), le module de verre (1) étant conçu pour convertir en électricité la lumière (L) incidente sur celui-ci, au moins deux plaques de verre (3, 4) revêtues d'une couche électriquement conductrice étant prévues, à savoir une première plaque de verre revêtue (3) et une deuxième plaque de verre revêtue (4), un matériau (5) de stockage d'énergie et un matériau (6) absorbant la lumière (L) étant disposés entre celles-ci, un électrolyte (10) étant prévu, lequel est introduit entre les plaques de verre (3, 4) par l'intermédiaire de plusieurs ouvertures (12) prévues au moins dans la deuxième plaque de verre revêtue (4), **caractérisé en ce qu'**au moins une couche de verre supplémentaire (11) est disposée du côté extérieur de la deuxième plaque de verre (4) de manière à obturer les ouvertures (12).

2. Module de verre (1) selon la revendication 1, **caractérisé en ce que** le matériau (5) de stockage d'énergie est réalisé sous forme de granulat, notamment sous forme de granulat de dioxyde de titane, au moins deux granulats présentant au moins deux tailles de grain moyennes différentes du granulat étant prévus.

3. Module de verre (1) selon la revendication 1 ou 2, **caractérisé en ce que** le matériau (6) absorbant la lumière (L) comprend un colorant ou est constitué de celui-ci.

4. Module de verre (1) selon l'une des revendications 1 à 3, **caractérisé en ce que** les plaques de verre revêtues (3, 4) présentent une transparence d'au moins 90 %, de préférence d'au moins 93 %, notamment d'au moins 97 %.

5. Module de verre (1) selon l'une des revendications 1 à 4, **caractérisé en ce qu'**au moins une entretoise (7), notamment transparente, est disposée entre les plaques de verre (3, 4).

6. Utilisation d'un module de verre (1) selon l'une des revendications 1 à 5 en tant qu'élément de toiture d'une serre.

7. Utilisation d'un module de verre (1) selon l'une des revendications 1 à 5 en tant qu'élément de façade d'une maison (2), par exemple d'une serre.

8. Utilisation d'un module de verre (1) selon l'une des revendications 1 à 5 pour un aménagement intérieur.

9. Bâtiment (2) comprenant au moins un module de verre (1) selon l'une des revendications 1 à 5, inséré dans une surface extérieure et/ou une surface de toit, **caractérisé en ce que** des profilés (8) sont prévus, le module de verre (1) étant disposé entre au moins deux profilés (8).

10. Procédé de fabrication d'un module de verre (1) destiné à être inséré dans une surface extérieure et/ou une surface de toit d'un bâtiment (2), le module de verre (1) étant réalisé au moins partiellement transparent, le module de verre (1) étant construit au moins partiellement sous forme de couches afin de convertir en électricité la lumière (L) incidente sur celui-ci, au moins deux plaques de verre (3, 4) revêtues d'une couche électriquement conductrice étant prévues, à savoir une première plaque de verre revêtue (3) et une deuxième plaque de verre revêtue (4), un matériau (5) de stockage d'énergie et un matériau (6) absorbant la lumière (L) étant disposés entre celles-ci, un électrolyte (10) étant prévu, lequel est introduit entre les plaques de verre (3, 4) par l'intermédiaire de plusieurs ouvertures (12) prévues au moins dans la deuxième plaque de verre revêtue (4), **caractérisé en ce qu'**au moins une couche de verre supplémentaire (11) est disposée du côté extérieur de la deuxième plaque de verre (4) de manière à obturer les ouvertures (12).

11. Procédé selon la revendication 10, **caractérisé en ce que** la première plaque de verre (3) est revêtue au moins partiellement d'une couche d'oxyde électriquement conductrice (9), au moins partiellement transparente.

12. Procédé selon la revendication 11, **caractérisé en ce que** le matériau (5) de stockage d'énergie est appliqué sur la première plaque de verre revêtue (3), celui-ci étant réalisé sous forme de granulat, notamment sous forme de granulat de dioxyde de titane, au moins deux granulats présentant au moins deux tailles de grain moyennes différentes du granulat étant mis en contact les uns avec les autres.

13. Procédé selon la revendication 11 ou 12, **caractérisé en ce qu'**au moins une entretoise (7), notamment transparente, est imprimée sur la première plaque de verre revêtue (3).
